(19) **Europäisches Patentamt**

**European Patent Office**

**Office européen des brevets**

(11) **EP 1 108 124 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **99945916.7**

(22) Anmeldetag: **06.07.1999**

(51) Int Cl.⁷: **F01N 7/00**, F02D 41/02

(86) Internationale Anmeldenummer:
**PCT/DE99/02078**

(87) Internationale Veröffentlichungsnummer:
**WO 00/009870 (24.02.2000 Gazette 2000/08)**

(54) **VERFAHREN ZUM ERKENNEN UND AUFRECHTERHALTEN DER BETRIEBSBEREITSCHAFT EINES NOx-SPEICHERKATALYSATORS**

METHOD FOR RECOGNIZING AND MAINTAINING THE OPERATIONAL CAPABILITY OF A NOx STORAGE CATALYTIC CONVERTER

PROCEDE POUR LA RECONNAISSANCE ET LE MAINTIEN DE L'APTITUDE A AGIR D'UN CATALYSEUR ACCUMULATEUR DE NOx

(84) Benannte Vertragsstaaten:
**DE FR GB**

(30) Priorität: **14.08.1998 DE 19836955**

(43) Veröffentlichungstag der Anmeldung:
**20.06.2001 Patentblatt 2001/25**

(73) Patentinhaber: **SIEMENS AKTIENGESELLSCHAFT 80333 München (DE)**

(72) Erfinder:
• **ZHANG, Hong D-93057 Regensburg (DE)**
• **BEER, Johannes D-93047 Regensburg (DE)**

(56) Entgegenhaltungen:
**EP-A- 0 773 354      DE-C- 19 714 293**
**US-A- 5 722 236      US-A- 5 746 049**

**Beschreibung**

Die Erfindung betrifft ein Verfahren zum Erkennen und Aufrechterhalten der Betriebsbereitschaft eines NOx-Speicherkatalysators gemäß dem Oberbegriff des Patentanspruches 1.

Für direkteinspritzende Otto-Brennkraftmaschinen wird zur Konvertierung der bei der Verbrennung entstehenden NOx-Schadstoffe ein NOx-Speicherkatalysator verwendet. Im Betrieb der Brennkraftmaschine mit magerem Gemisch wird NOx gespeichert, bei Betrieb mit fettem Gemisch wird gespeichertes NOx durch im Abgasstrom enthaltenes HC und CO reduziert und so zu $N_2$ konvertiert.

Die optimale NOx-Speicherkapazität des NOx-Speicherkatalysators ist dabei nur in einem bestimmten Temperaturintervall des Katalysatormonolithen gegeben. Dieses Temperaturintervall liegt typischerweise in einem Bereich von 250°C - 450°C.

Zudem ist die Monolithtemperatur eine wichtige Eingangsgröße für die NOx-Speicherfunktion, die in Abhängigkeit von motorischen Größen und der Monolithtemperatur den augenblicklichen Beladungsgrad des NOx-Speicherkatalysators bestimmt. Übersteigt der Beladungsgrad eine bestimmte Grenze, so wird ein Regenerationszyklus eingeleitet, in dem der Beladungsgrad wieder dekrementiert wird.

Versuche zeigen, daß das Temperaturverhalten eines NOx-Speicherkatalysators während Instationärvorgängen durch die beiden extremalen Monolithtemperaturen, die in Strömungsrichtung des Abgases gesehen am Katalysatoreingang und am Katalysatorausgang auftreten, gekennzeichnet ist. Diese beiden extremalen Temperaturen weisen stark unterschiedliches zeitliches Verhalten auf.

Dieses Verhalten gilt sowohl für Abgassysteme, bei denen der Katalysator einen einzigen Monolithen enthält, als auch für Katalysatoren mit mehreren, voneinander beabstandeten (getrennten) Monolithen.

Aus der US 5,746,049 ist ein Verfahren zur Bestimmung der Temperatur einer NOx-Falle eines Katalysators bekannt, bei dem die Temperatur der NOx-Falle in Abhängigkeit einer Midbed-Temperatur eines 3-Wege Katalysators stromaufwärts der NOx-Falle und in Abhängigkeit des Einflusses von zugeführter Luft stromaufwärts der Falle zur Reinigung der Falle bestimmt wird.

Der Erfindung liegt die Aufgabe zugrunde, ein Verfahren zum Erkennen und Aufrechterhalten der Betriebsbereitschaft eines NOx-Speicherkatalysators anzugeben. Insbesondere soll sichergestellt sein, daß er in einem zulässigen Temperaturbereich betrieben werden kann, in dem eine hohe Konvertierungsrate gegeben ist.

Diese Aufgabe wird durch die Merkmale des Patentanspruches 1 gelöst. Vorteilhafte Ausgestaltungen der Erfindung sind in den Unteransprüchen angegeben.

Ein zuverlässiges Erkennen und Aufrechterhalten der Betriebsbereitschaft des NOx-Speicherkatalysators wird erfindungsgemäß erreicht, in dem aus modellierter oder gemessener Abgastemperatur stromauf des NOx-Speicherkatalysators die Katalysatormonolithtemperatur im Katalysator durch ein Temperaturmodell bestimmt wird.

Aufgrund des zeitlich unterschiedlichen Temperaturverhaltens von Ein- und Ausgang des NOx-Speicherkatalysators wird die Monolithtemperatur am Ausgang des NOx-Speicherkatalysators durch ein zusätzliches, gleich arbeitendes Temperaturmodell bestimmt. Eingangsgröße dieses Temperaturmodells ist die mittels des Modells berechnete Monolithtemperatur am Eingang des Katalysators.

Durch motorische Maßnahmen, wie z.B. Anfetten, Anheben der Temperatur durch Spätverstellen des Zündwinkels usw. wird dafür gesorgt, daß sich beide Temperaturwerte der Katalysatormonolithen in einem zulässigen Temperaturintervall befinden.

Das erfindungsgemäße Verfahren hat den Vorteil, daß die Anzahl von teueren Temperatursensoren vermindert werden kann, insbesondere braucht keine konstruktiv aufwendige Messung innerhalb des Katalysatormonolithen durchgeführt werden.

Durch die genaue Bestimmung der Monolithtemperaturen über ein Modell kann das für eine hohe Konvertierungsrate einzuhaltende Temperaturfenster genau eingehalten werden, unnötig ausgelöste Regenerationsphasen können vermieden werden, was sich wiederum in Kraftstoffeinsparungen und verbessertem Abgasverhalten niederschlägt.

Die Erfindung wird nachfolgend unter Bezugnahme auf die Zeichnung näher erläutert. Es zeigen:

Figur 1    ein Blockschaltbild einer Abgasanlage einer mit Direkteinspritzung arbeitenden Brennkraftmaschine mit zugehöriger Steuerungseinrichtung,

Figur 2    eine Prinzipdarstellung der Energiebilanzierung in einem dem NOx-Speicherkatalysator vorgeschalteten Vorkatalysator,

Figur 3    den graphischen Zusammenhang zwischen dem Wirkungsgrad der NOx-Konvertierung und der Monolithtemperatur,

Figur 4    zeitliche Verläufe von Monolithtemperaturen beim Aufheizen des NOx-Speicherkatalysators und

Figur 5    zeitliche Verläufe von Monolithtemperaturen beim Abkühlen des NOx-Speicherkatalysators.

Eine mit Direkteinspritzung arbeitende Otto-Brennkraftmaschine 10 ist mit einem Ansaugtrakt 11 und einem Abgastrakt 12 verbunden. Sie weist eine Kraftstoffzumeßeinrichtung 13 auf, die eine der Zylinderanzahl der Brennkraftmaschine entsprechende Anzahl von Einspritzventilen beinhaltet und die über entsprechende Signale einer elektronischen Steuerungseinrichtung 14 der Brennkraftmaschine angesteuert werden. Über die Einspritzventile wird Kraftstoff direkt in die Zylinder der Brennkraftmaschine eingespritzt. In der Figur ist dabei die eingespritzte Kraftstoffmenge bei Betrieb mit Ladungsschichtung als MFF bezeichnet.

Ein im Ansaugtrakt 11 angeordneter Luftmassenmesser 15 gibt ein Signal für den der Verbrennung in den Zylindern zugeführten Luftmassenstrom $\dot{M}$ an die Steuerungseinrichtung 14 ab. Im Abgastrakt 12 ist ein Vorkatalysator 16, auch als Precat bezeichnet und ein in Strömungsrichtung des Abgases gesehen nachgeschalteter NOx-Speicherkatalysator 17, auch als NOx-Trap bezeichnet, angeordnet. Beide Katalysatoren 16, 17 sind mittels eines kurzen, nicht näher bezeichneten Abgasrohres miteinander verbunden. Der Vorkatalysator 16 ist an einer Stelle nahe des Auslasses der Brennkraftmaschine 10 angeordnet und dient zur Verkürzung der Aufheizzeit des NOx-Speicherkatalysators 17. Außerdem konvertiert er hauptsächlich die Schadstoffe HC und CO. Der NOx-Speicherkatalysator 17 dient in erster Linie zum Konvertieren von NOx, er weist aber auch 3-Wege Eigenschaften auf.

Der Vorkatalysator 16 weist einen einzigen Monolithen Mon auf, während der NOx-Speicherkatalysator 17 zwei räumlich getrennte Monolithen Mon1 und Mon2 besitzt. Als Monolith wird dabei ein wabenförmiger Körper aus Metall oder Keramik bezeichnet, der eine geeignete Beschichtung aufweist.

Stromaufwärts des Vorkatalysators 16 ist eine Lambdasonde 18 angeordnet, welche in Abhängigkeit des Restsauerstoffgehaltes im Abgas ein stetiges Ausgangssignal λ an die Steuerungseinrichtung 14 abgibt. Sie dient in bekannter Weise als Regelglied für eine Lambdaregelung des Kraftstoff-Luftgemisches der Brennkraftmaschine 10.

Ferner sind in dem Blockschaltbild an verschiedenen Stellen im Abgassystem Temperatursensoren eingezeichnet, von denen aber entsprechend der im folgenden beschriebenen Varianten des erfindungsgemäßen Verfahrens entweder alle, eine Kombination daraus, oder in einem besonderen Fall überhaupt keiner benötigt werden.

Ein Temperatursensor 19 erfaßt die Abgastemperatur $T_{vvk}$ stromauf des Vorkatalysators 16 und ein Temperatursensor 20 erfaßt die Abgastemperatur $T_{nvk}$ stromab des Vorkatalysators 16. Mit einem weiteren Temperatursensor 21 wird die Temperatur des Abgases $T_{vtr}$ stromauf des NOx-Speicherkatalysators 17 gemessen.

Die elektronische Steuerungseinrichtung 14 weist in bekannter Weise einen Mikrocomputer, entsprechende Schnittstellen für Signalaufbereitungsschaltungen, sowie eine Ein- und Ausgabeeinheit auf. Der Mikrocomputer umfaßt eine Zentraleinheit (CPU), welche die arithmetischen und logischen Operationen mit den eingespeisten Daten durchführt. Die dazu notwendigen Programme und Solldaten liefert ein Festwertspeicher (ROM), in dem alle Programmroutinen und alle Kenndaten, Kennlinien, Sollwerte usw. unverlierbar gespeichert sind. Insbesondere ist die Steuerungseinrichtung mit einem Speicher 24 verbunden, in dem u.a. eine Mehrzahl von Kennlinien bzw. Kennfeldern und Schwellenwerten gespeichert sind, deren Bedeutungen anhand der Beschreibung der nachfolgenden Figuren noch näher erläutert werden. Ein Betriebsdatenspeicher (RAM) dient u.a. dazu, die von den Sensoren gelieferten Daten zu speichern, bis sie vom Mikrocomputer abgerufen oder durch aktuellere Daten ersetzt, d.h. überschrieben werden. Über einen Bus werden alle genannten Einheiten mit Daten, Speicheradressen und Kontrollsignalen versorgt.

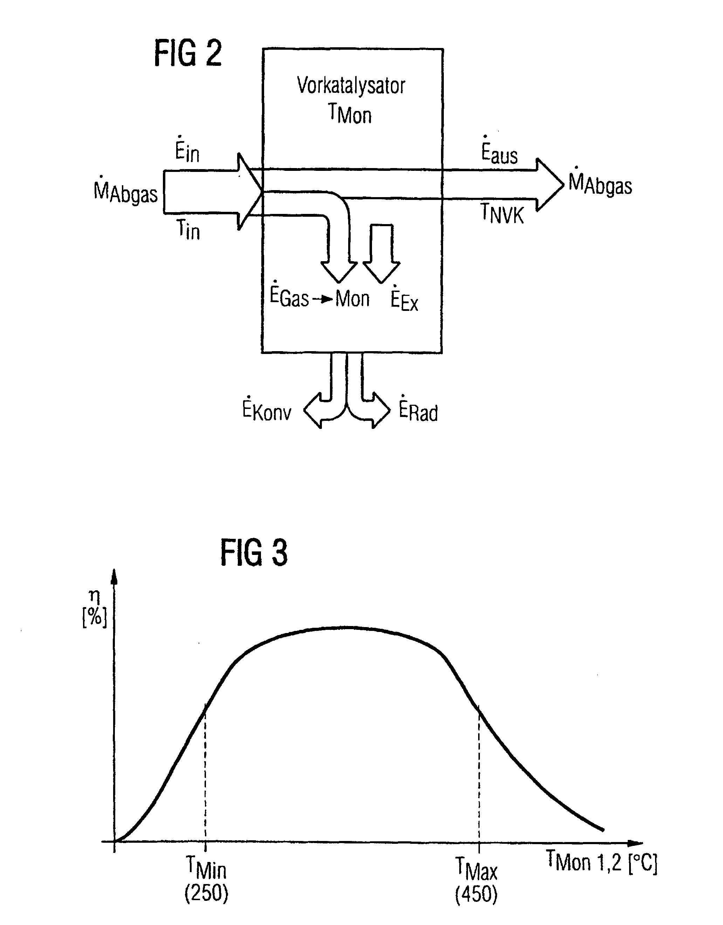

Zur Steuerung und Regelung der Brennkraftmaschine 10 ist die Steuerungseinrichtung 14 über eine hier nur schematisch dargestellte Daten- und Steuerleitung 22 noch mit weiteren Sensoren und Aktoren verbunden. Die Steuerungseinrichtung 14 wertet die Sensorsignale aus und steuert bzw. regelt unter anderem die Zündung, die Einspritzung, sowie die Abgasnachbehandlung. Als ein für das Verständnis der Erfindung wesentlicher Teil der Steuerungseinrichtung 14 ist ein Block 23 dargestellt, der die von den einzelnen Temperatursensoren abgegebene Signale auswertet und unter Benutzung weiterer, u.a. den Betriebszustand der Brennkraftmaschine charakterisierenden Parameter daraus die Temperaturen der einzelnen Monolithen mittels einer Modellbildung ermittelt, wie es im nachfolgenden anhand der Figuren 2-5 näher erläutert wird.

Im folgenden werden mehrere Möglichkeiten vorgestellt, wie unter Verwendung unterschiedlicher Eingangsgrößen die Monolithtemperaturen des NOx-Speicherkatalysators mit Hilfe eines Modells ermittelt werden können.

Gemäß einer ersten Variante wird die Temperatur $T_{vtr}$ stromauf des NOx-Speicherkatalysators 17 mittels des Temperatursensors 21 erfaßt. Dieser Wert ist Eingangsgröße für ein Temperaturmodell, mit dem die Monolithtemperatur $T_{Mon1}$ des 1. Monolithen Mon1 im NOx-Speicherkatalysator 17 ermittelt wird.

Wendet man eine Energiebilanzierung auf den 1. Monolithen an, so ergibt sich mit der gemessenen Eingangstemperatur $T_{vtr}$ als Eingangsgröße $T_{in}$ für das Modell:

$$T_{in} = T_{vtr} \tag{1}$$

$$\dot{T}_{Mon1} \cdot k_2 = \dot{E}_{Gas \to Mon1} + \dot{E}_{Ex} - \dot{E}_{Konv} \qquad (2)$$

Die linke Seite von Gleichung (2) bezeichnet die thermische Energie des Monolithen Mon1; $k_2$ ist das Produkt aus thermischer Masse u. Wärmekapazität des Monolithen Mon1. Für die Terme auf der rechten Seite gilt:

$$\dot{E}_{Gas \to Mon1} = \dot{M} \cdot k_1 \cdot (T_{in} - T_{Mon1}) \qquad (3)$$

Gleichung (3) bezeichnet den Wärmeübergang von Abgas auf den Monolithen Mon1. Mit $k_1$ ist der Wärmeübergangskoeffizient Abgas nach Monolith bezeichnet.

Der exotherme Reaktionsenergiestrom während des homogen mageren und geschichteten (stratified) Betrieb der Brennkraftmaschine, sowie während der Regenerationsphasen wird durch Gleichung (4) beschrieben:

$$\dot{E}_{Ex} = \dot{E}_{Ex\_Hom\_Strat}(\dot{M}, MFF, \lambda, k_4) + \dot{E}_{Ex\_reg}(\dot{M}, \lambda, k_5) \qquad (4)$$

Die Parameter $k_4$ u. $k_5$ sind zusätzliche Optimierungsparameter, um gemessene u. modellierte Temperaturverläufe besser anzupassen.

Die Energieabgabe an die Umgebung durch Konvektion wird durch die Gleichung (5) beschrieben:

$$\dot{E}_{Konv} = k_3(v) \cdot (T_{Mon1} - T_{20}) \qquad (5)$$

Die Konvektionskonstante $k_3(v)$ ist dabei von der Fahrgeschwindigkeit des mit dem beschriebenen Abgassystem ausgerüsteten Kraftfahrzeuges abhängig. $T_{20}$ bezeichnet die Umgebungstemperatur.

Faßt man die Gleichungen (2)-(5) zusammen, so erhält man eine gewöhnliche DGL 1.Ordnung für die Monolithtemperatur $T_{Mon1}$ des 1. Monolithen Mon1 im NOx-Speicherkatalysator 17:

$$\dot{T}_{Mon1} + \frac{\dot{M} \cdot k_1 + k_3(v)}{k_2} \cdot T_{Mon1} = \frac{\dot{M} \cdot k_1 \cdot T_{in} + k_3(v) \cdot T_{20} + \dot{E}_{Ex}}{k_2} \qquad (6)$$

Aus Gleichung (6) kann die gesuchte Monolithtemperatur $T_{Mon1}$ durch ein aus der Mathematik hinlänglich bekanntes Integrationsverfahren (z.B. Euler, Runge Kutta) bestimmt werden. Die Modellparameter $k_1$ - $k_3$ werden durch eine Parameteroptimierung (z.B. Gradientenverfahren) so bestimmt, daß die mit dem Modell berechnete Monolithtemperatur $T_{Mon1}$ so gut wie möglich mit der gemessenen Monolithtemperatur bei Betrieb der Brennkraftmaschine mit fettem Gemisch oder unbeschichteten NOx-Speicherkatalysator (in diesem Betriebszustand findet keine keine exotherme Reaktion statt) übereinstimmt. Bei Verwendung eines Rohemmissions-NOx-Speicherkatalysators (enthält washcoat, aber kein Edelmetall und somit keine Exothermie) können die Parameter $k_1$ - $k_3$ wie oben beschrieben, in beliebigen Betriebszuständen der Brennkraftmaschine identifiziert werden. Anschließend werden bei festgehaltenen Parametern $k_1$ - $k_3$ und unter Verwendung eines NOx-Speicherkatalysators mit Edelmetall die Parameter $k_4$ u. $k_5$ so bestimmt, daß die mit dem Modell berechnete Monolithtemperatur $T_{Mon1}$ so gut wie möglich mit der gemessenen Monolithtemperatur bei homogen mageren, geschichteten Betrieb der Brennkraftmaschine, sowie während der Regenerationsphase des NOx-Speicherkatalysators übereinstimmt.

Um das Modell abzugleichen, wird auf dem Prüfstand die Temperatur des Monolithen Mon1 mittels eines Temperatursensors gemessen, mit der modellierten Größe verglichen und die Modellparameter so eingestellt, daß die nachgebildete und die tatsächliche Temperatur möglichst genau übereinstimmen. Ist eine vorgegebene Genauigkeit bei der Übereinstimmung erreicht, so ist das Modell richtig abgeglichen und es kann für dieses Fahrzeug mit dem untersuchten Abgassystem zur Berechnung der Monolithtemperatur herangezogen werden. Dadurch kann auf den Einsatz eines teuren, nur mit großem technischen Aufwand realisierbaren Temperatursensors unmittelbar im Monolithen verzichtet werden. Ein solcher ist nur für die Applikation und den Abgleich des Modells auf dem Prüfstand notwendig.

Messungen zeigen, daß sich das Temperaturverhalten des 2. Monolithen, insbesondere während instationärer Betriebszustände deutlich vom Verhalten des 1. Monolithen unterscheidet. Deshalb ist es notwendig das Temperaturverhalten des 2. Monolithen durch ein eigenes Modell zu berücksichtigen.

Dazu wird die Ausgangsgröße $T_{Mon1}$ des Temperaturmodells für den 1. Monolithen als Eingangstemperatur für die Modellierung der 2. Monolithtemperatur $T_{Mon2}$ verwendet:

$$T_{in} = T_{Mon1} \qquad (7)$$

Es wird dabei angenommen, das nach Durchströmen des Abgases von Monolith 1 die Abgastemperatur gleich der Monolithtemperatur $T_{Mon1}$ ist.

Mit der Eingangsgröße aus Gleichung (7) gelten die Gleichungen (2)-(6) analog für die Monolithtemperatur $T_{Mon2}$ des 2. Monolithen. Die Parameter $k_1$-$k_5$ werden analog bestimmt, wie es anhand der Modellbildung der Monolithtemperatur $T_{Mon1}$ des 1. Monolithen beschrieben wurde, wobei sich im allgemeinen unterschiedliche Werte als die bei der Bestimmung von $T_{Mon1}$ ergeben. Für die Monolithtemperatur $T_{Mon2}$ ergibt sich somit eine gewöhnliche Differentialgleichung 2. Ordnung.

Gemäß einer zweiten Variante wird nicht die Abgastemperatur $T_{vtr}$ stromauf des NOx-Speicherkatalysators 17 als Eingangsgröße für das Temperaturmodell zur Bestimmung der beiden Monolithtemperaturen herangezogen, sondern die Abgastemperatur stromab des Vorkatalysators 16. Dieses Verfahren wird insbesondere dann angewandt, wenn die zur Diagnose des Vorkatalysators 16 ohnehin notwendigen Temperatursensoren 19 und 20 vorhanden sind. Damit steht die Temperatur $T_{nvk}$ auch zur Modellierung der Monolithtemperaturen zur Verfügung und bei einer solchen Konfiguration der Temperatursensoren erübrigt sich ein weiterer Temperatursensor zur Temperaturüberwachung des NOx-Speicherkatalysators. Die Modellparameter werden dabei so angepaßt, daß der Einfluß des Abgasrohres zwischen der Position des Temperatursensors 20 und dem Einlaß des NOx-Speicherkatalysators 17 berücksichtigt wird.

Die mittels des Temperatursensors 20 gemessene Temperatur $T_{nvk}$ wird als Eingangsgröße $T_{in}$ für das Monolithtemperaturmodell verwendet:

$$T_{in} = T_{nvk} \qquad (8)$$

Analog dem oben beschriebenen Verfahren werden nach den Gleichungen (2)-(6) die Modellparameter zur Berechnung der Monolithtemperatur $T_{Mon1}$ bestimmt.

Im Anschluß an die Bestimmung der Monolithtemperatur $T_{Mon1}$ des ersten Monolithen Mon1 werden im weiteren die Modellparameter zur Berechnung der Monolithtemperatur $T_{Mon2}$ des zweiten Monolithen Mon2 bestimmt, wobei als Eingangsgröße $T_{in}$ für das Modell

$$T_{in} = T_{Mon1} \qquad (9)$$

gilt. Das weitere Vorgehen ist analog zu dem bereits beschriebenen Verfahren. Es ist dabei eine Differentialgleichung 2. Ordnung zu lösen.

Für den Fall, daß weder der Temperatursensor 19, noch der Temperatursensor 20 vorhanden ist und somit die Temperaturwerte des Abgases vor ($T_{vvk}$) und nach ($T_{nvk}$) dem Vorkatalysator 16 nicht zur Verfügung stehen (in diesem Fall ist auch keine Diagnose des Vorkatalysators möglich), kann ein beliebiges Abgastemperaturmodell zur Bestimmung der Abgastemperatur $T_{vvk}$ stromauf des Vorkatalysators verwendet werden. Mittels eines solchen Abgastemperaturmodells werden aus Zustandsgrößen der Brennkraftmaschine, welche die Abgastemperatur beeinflussen, wie z.B. Zündwinkel, angesaugte Luftmasse, Saugrohrdruck, Drehzahl, Kühlmitteltemperatur, Umgebungstemperatur die Abgastemperatur berechnet.

Durch ein Temperaturmodell für den Vorkatalysator 16 wird daran anschließend die Temperatur $T_{nvk}$ stromab des Vorkatalysators 16 modelliert. Die so erhaltene Temperatur $T_{nvk}$ kann dann wie oben bereits beschrieben (Gleichungen (2)-(6)) zur Bestimmung der beiden Monolithtemperaturen $T_{Mon1}$ und $T_{Mon2}$ verwendet werden. Dabei gilt für die Eingangsgröße des Modells zur Modellierung der Temperatur $T_{nvk}$:

$$T_{in} = T_{vvk} \qquad (10)$$

Die Figur 2 zeigt eine Prinzipdarstellung der Energiebilanzierung im Vorkatalysator. Bei der Energiebilanzierung der thermischen Energie des Monolithen wird angenommen, daß die exotherme Reaktionsenergie, die mit Hilfe der Gleichung (4) unter Verwendung geeigneter Parameter bestimmt werden kann, vollständig zur Erwärmung des Monolithen aufgewendet wird. Damit erhält man

$$\dot{E}_{Gas \to Mon} + \dot{E}_{Ex} = \dot{T}_{Mon} \cdot k_2 + \dot{E}_{Konv} + \dot{E}_{Rad} \tag{11}$$

wobei für den Wärmeübergang von Abgas auf den Monolithen $\dot{E}_{Gas \to Mon}$ und die durch Konvektion abgegebene Energie $\dot{E}_{Konv}$ die Gleichungen (3) bzw. (4) gelten.

Für die an die Umgebung abgegebene Strahlungsleistung gilt:

$$\dot{E}_{Rad} = k_6 \cdot \left( T_{Mon}{}^4 - T_{20}{}^4 \right) \tag{12}$$

Dabei steht die Größe $k_6$ für das Produkt aus Boltzmannkonstante u. der Oberfläche des Vorkatalysatorgehäuses.

Aus Gleichung (11) erhält man eine gewöhnliche nicht lineare Differentialgleichung 1.Ordnung für die Monolithtemperatur $T_{Mon}$ des Vorkatalysators, die sich durch ein Integrationsverfahren (z.B. Euler, Runge Kutta) lösen läßt.

Eine Energiebilanzierung über die zugeführte und abgegebene Abgasenergie sowie vom Abgas auf den Monolithen übertragenen Wärmestrom, liefert einen Ausdruck für die Abgastemperatur $T_{nvk}$ nach dem Vorkatalysator:

$$\dot{E}_{in} = \dot{E}_{Gas \to Mon} + \dot{E}_{aus} \tag{13}$$

Dabei gilt mit der spezifischen Wärme des Abgases $c_p$ :

$$\dot{E}_{in} = c_p \cdot \dot{M} \cdot T_{in}; \qquad \dot{E}_{aus} = c_p \cdot \dot{M} \cdot T_{nvk} \tag{14}$$

Aus den Gleichungen (13) und (14) folgt schließlich:

$$T_{nvk} = T_{in} - \frac{k_1}{c_p} \left( T_{in} - T_{Mon} \right) \tag{15}$$

Die Modellparameter $k_1$, $k_2$, $k_3$, $k_6$ sowie die Parameter der exothermen Energie $k_4$ und $k_5$ aus Gleichung (4) werden über ein Parameteroptimierungsverfahren (z.B. Gradientenverfahren) so bestimmt, daß die Temperatur $T_{nvk}$ modelliert bestmöglich mit der entsprechenden gemessenen Größe übereinstimmt. Die Modellparameter $k_1$, $k_2$, $k_3$, $k_6$ werden dabei, wie für den NOx-Speicherkatalysator beschrieben, zuerst bestimmt.

Im folgenden wird erläutert, wie mit Hilfe der über die beschriebenen Modelle ermittelten Monolithtemperaturen die Betriebsbereitschaft des NOx-Speicherkatalysators erkannt und aufrechterhalten werden kann.

Zur optimalen Speicherung von NOx darf der NOx-Speicherkatalysator nur in einem bestimmten Temperaturfenster betrieben werden. Die entscheidenden Temperaturen sind dabei die Monolithtemperaturen. Damit ergibt sich als Bedingung für die Monolithtemperaturen:

$$\left( T_{Mon1} \in \left[ T_{Min}, T_{Max} \right] \right) \wedge \left( T_{Mon2} \in \left[ T_{Min}, T_{Max} \right] \right) \tag{16}$$

Beide Monolithtemperaturen müssen also innerhalb des von einem unteren Temperaturschwellenwert $T_{Min}$ und einem oberen Temperaturschwellenwert $T_{Max}$ begrenzten Temperaturintervalles liegen. Daraus ergibt sich eine zeitliche Bedingung, ab wann der NOx-Speicherkatalysator betriebsbereit ist und seine größte Konvertierungsrate besitzt.

In Figur 3 ist qualitativ der Verlauf des Wirkungsgrades der NOx-Konvertierung in Abhängigkeit der Monolithtemperatur $T_{Mon1}$ bzw. $T_{Mon2}$ graphisch dargestellt. Ein typischer Wert für $T_{Min}$ liegt bei 250°C, ein typischer Wert für $T_{Max}$ liegt bei 450°C. Ist die Temperatur des Monolithen kleiner als der untere Schwellenwert oder größer als der obere Schwellenwert, so findet die Konvertierung nur mit einem sehr geringen Wirkungsgrad statt. Das Temperaturfenster muß deshalb möglichst genau eingehalten werden.

Die mit Hilfe der beschriebenen Modelle bestimmten Monolithtemperaturen $T_{Mon1}$ und $T_{Mon2}$ werden nun mit diesen Schwellenwerten $T_{Min}$ und $T_{max}$ verglichen. Nur wenn beide Temperaturen innerhalb des durch die Schwellenwerte definierten Intervalls liegen, ist der NOx-Speicherkatalysator betriebsbereit und die Brennkraftmaschine kann in einem Betriebsbereich betrieben werden, der eine NOx-Speicherung erfordert (homogen mager oder geschichtet).

Liegt zumindest eine Monolithtemperatur außerhalb des Intervalles, so werden steuernde Maßnahmen eingeleitet, die entweder ein Aufheizen (bei Unterschreiten des unteren Schwellenwertes $T_{Min}$) oder ein Abkühlen (bei Überschreiten des oberen Schwellenwertes $T_{Max}$) des NOx-Speicherkatalysators bewirken.

Dadurch wird erreicht, daß der NOx-Speicherkatalysator wieder in dem optimalen Temperaturbereich betrieben wird.

Als mögliche steuernde Maßnahme zum Erhöhen der Monolithtemperatur des NOx-Speicherkatalysators kann der Zündwinkel in Richtung spät verstellt werden und/oder die Brennkraftmaschine im Warmlauf mit fettem Gemisch in Verbindung mit Sekundärlufteinblasung betrieben werden.

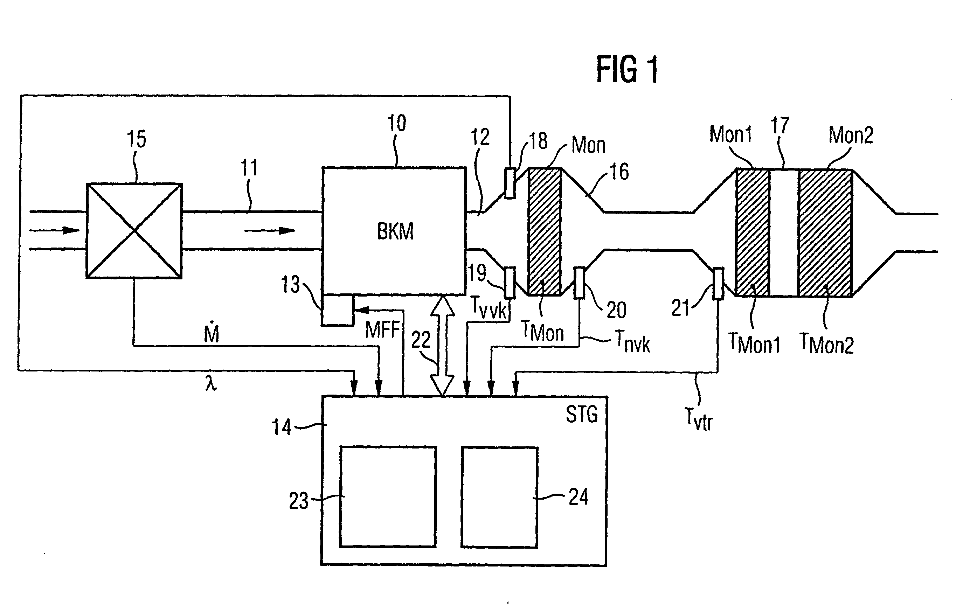

Zum Senken der Monolithtemperatur kann eine, in der Figur 1 nicht dargestellte, stromauf des NOx-Speicherkatalysators angeordnete Abgasklappe betätigt werden, die den Abgasweg verlängert, indem sie einen Teil des Abgases in einen Bypass leitet und somit eine Kühlung des Abgases bewirkt. Die Brennkraftmaschine kann aber auch mit fettem Gemisch betrieben werden, oder ein Teil des Abgases wird durch eine Abgasrückführeinrichtung wieder dem Verbrennungsprozess zugeführt, wodurch die Spitzentemperatur im Zylinder gesenkt wird und folgedessen das ausströmende Abgas eine geringere Temperatur aufweist.

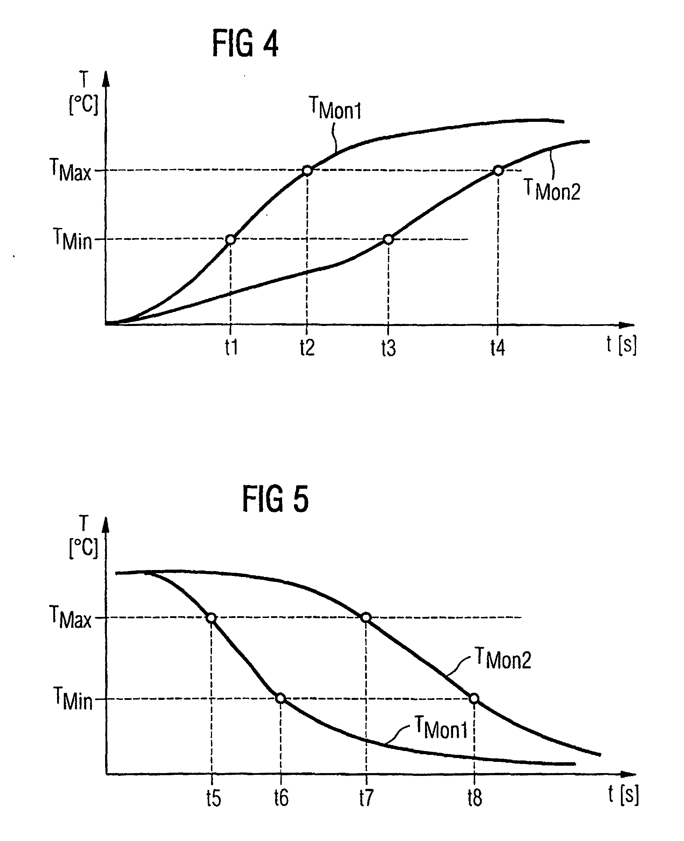

Die Figur 4 zeigt in qualitativer Darstellung die zeitlichen Verläufe der beiden Monolithtemperaturen $T_{Mon1}$ und $T_{Mon2}$ während des Aufheizvorganges des NOx-Speicherkatalysators.
Das Aufheizverhalten ist gekennzeichnet durch $\frac{dT_{vtr}}{dt} > 0$.
Liegen beide Monolithtemperaturen $T_{Mon1}$ und $T_{Mon2}$ während des Aufheizvorganges noch unterhalb des Schwellenwertes $T_{Min}$, so steigt zunächst die Monolithtemperatur $T_{Mon1}$ des 1. Monolithen schneller an, als die Monolithtemperatur $T_{Mon2}$ des 2. Monolithen. Die Monolithtemperatur $T_{Mon1}$ erreicht den Schwellenwert $T_{Min}$ zum Zeitpunkt t1, während die Monolithtemperatur $T_{Mon2}$ diesen erst zum Zeitpunkt t3 erreicht. Dies bedeutet, daß die Monolithtemperatur $T_{Mon2}$ die kritische Temperatur ist. Erst wenn auch die Monolithtemperatur $T_{Mon2}$ den unteren Schwellenwert überschritten hat, steht die volle Konvertierungsfähigkeit und Speichereigenschaft des NOx-Speicherkatalysators zur Verfügung.

Liegen beide Monolithtemperaturen $T_{Mon1}$ und $T_{Mon2}$ im Intervall [$T_{Min}, T_{Max}$], so steigt zunächst die Monolithtemperatur $T_{Mon1}$ schneller an als die Monolithtemperatur $T_{Mon2}$. Die Monolithtemperatur $T_{Mon1}$ erreicht den Schwellenwert $T_{Max}$ zum Zeitpunkt t2, während die Monolithtemperatur $T_{Mon2}$ diesen erst zum Zeitpunkt t4 erreicht. Dies bedeutet, daß die Monolithtemperatur $T_{Mon1}$ die kritische Temperatur ist, da diese zuerst den oberen Schwellenwert $T_{Max}$ überschreitet.

Die Figur 5 zeigt in qualitativer Darstellung die zeitlichen Verläufe der beiden Monolithtemperaturen $T_{Mon1}$ und $T_{Mon2}$ während des Abkühlvorganges des NOx-Speicherkatalysators.
Das Abkühlverhalten ist gekennzeichnet durch ($\frac{dT_{vtr}}{dt} < 0$).
Liegen beide Monolithtemperaturen $T_{Mon1}$ und $T_{Mon2}$ während des Aufheizvorganges noch oberhalb des Schwellenwertes $T_{Max}$, so fällt zunächst die Monolithtemperatur $T_{Mon1}$ des 1. Monolithen schneller ab, als die Monolithtemperatur $T_{Mon2}$ des 2. Monolithen. Die Monolithtemperatur $T_{Mon1}$ fällt zum Zeitpunkt t5 unterhalb des Schwellenwertes $T_{Max}$, während die Monolithtemperatur $T_{Mon2}$ diesen erst zum Zeitpunkt t7 unterschreitet. Dies bedeutet, daß die Monolithtemperatur $T_{Mon2}$ die kritische Temperatur ist. Messungen zeigen, daß die Zeitspanne t7-t5 bis zu ca. 200 Sekunden betragen kann.

Liegen beide Monolithtemperaturen $T_{Mon1}$ und $T_{Mon2}$ im Intervall [$T_{Min}, T_{Max}$], so fällt zunächst die Monolithtemperatur $T_{Mon1}$ schneller ab als die Monolithtemperatur $T_{Mon2}$. Die Monolithternperatur $T_{Mon1}$ erreicht den unteren Schwellenwert $T_{Min}$ zum Zeitpunkt t6, während die Monolithtemperatur $T_{Mon2}$ diesen erst zum Zeitpunkt t8 erreicht. Dies bedeutet, daß die Monolithtemperatur $T_{Mon1}$ die kritische Temperatur ist, da diese zuerst den unteren Schwellenwert $T_{Min}$ unterschreitet.

**Patentansprüche**

1.  Verfahren zum Erkennen und Aufrechterhalten der Betriebsbereitschaft eines im Abgastrakt (12) einer Brennkraftmaschine (10) angeordneten NOx-Speicherkatalysators (17), wobei

    -  die Temperatur ($T_{vtr}$, $T_{nvk}$) des Abgases stromauf des NOx-Speicherkatalysators (17) ermittelt wird,

wobei

- aus der ermittelten Abgastemperatur ($T_{vtr}$) über ein eine Energiebilanzierung beinhaltendes Temperaturmodell eine erste Monolithtemperatur ($T_{Mon1}$) am Eingang des NOx-Speicherkatalysators (17) berechnet wird,

- aus der ersten Monolithtemperatur ($T_{Mon1}$) über das Temperaturmodell eine zweite Monolithtemperatur ($T_{Mon2}$) am Ausgang des NOx-Speicherkatalysators (17) berechnet wird,

- überprüft wird, ob beide Monolithtemperaturen ($T_{Mon1}$,$T_{Mon2}$) innerhalb eines vorgegebenen Temperaturintervalles ($[T_{Min}, T_{Max}]$) liegen,

- in Abhängigkeit des Ergebnisses der Überprüfung steuernde Maßnahmen für den Betrieb der Brennkraftmaschine (10) eingeleitet werden, so daß diese Temperaturbedingung $[T_{Min}, T_{Max}]$) erfüllt und im weiteren Betrieb der Brennkraftmaschine aufrechterhalten wird,

**dadurch gekennzeichnet, daß**

- die im Temperaturmodell beinhaltende Energiebilanzierung die thermische Energie des Monolithen, die thermische Masse des Monolithen, den Wärmeübergang von Abgas auf den Monolithen, die exotherme Reaktionsenergie und die Energieabgabe an die Umgebung durch Konvektion berücksichtigt und daß

- aus der Energiebilanzierung eine gewöhnliche Differentialgleichung 1. Ordnung aufgestellt wird, aus der mittels eines Integrationsverfahrens die jeweilige Monolithtemperatur bestimmt wird.

2. Verfahren nach Anspruch 1, **dadurch gekennzeichnet, daß** die Temperatur des Abgases ($T_{vtr}$, $T_{nvk}$) mittels eines Temperatursensors (21) gemessen wird, der im Einlaßbereich des NOx-Speicherkatalysators (17) angeordnet ist.

3. Verfahren nach Anspruch 1, **dadurch gekennzeichnet, daß** dem NOx-Speicherkatalysator (17) in Strömungsrichtung des Abgases gesehen ein Vorkatalysator (16) vorgeschaltet ist und die Temperatur des Abgases ($T_{nvk}$) am Auslaß des Vorkatalysators ermittelt wird.

4. Verfahren nach Anspruch 3, **dadurch gekennzeichnet, daß** die Abgastemperatur ($T_{nvk}$) mittels eines Temperatursensors (20) gemessen wird.

5. Verfahren nach Anspruch 3, **dadurch gekennzeichnet daß** die Abgastemperatur ($T_{nvk}$) über ein Temperaturmodell für den Vorkatalysator (16) berechnet wird und als Eingangsgröße für dieses Modell die Abgastemperatur ($T_{vvk}$) am Auslaß der Brennkraftmaschine herangezogen wird.

6. Verfahren nach Anspruch 3, **dadurch gekennzeichnet daß** die Abgastemperatur ($T_{nvk}$) über ein Temperaturmodell für den Vorkatalysator (16) berechnet wird und als Eingangsgröße für dieses Modell die mittels eines Abgastemperaturmodells erhaltene Abgastemperatur herangezogen wird.

7. Verfahren nach Anspruch 6, **dadurch gekennzeichnet, daß** als Eingangsgröße für das Abgastemperaturmodell mindestens eine der folgenden Zustandsgrößen der Brennkraftmaschine angesaugte Luftmasse, Saugrohrdruck, Zündwinkel, Drehzahl, Kühlmitteltemperatur, Umgebungstemperatur verwendet wird, welche die Abgastemperatur beeinflußt.

8. Verfahren nach Anspruch 6, **dadurch gekennzeichnet, daß** Maßnahmen zum Aufheizen des NOx-Speicherkatalysators (17) eingeleitet werden, wenn die Monolithtemperatur einen unteren Schwellenwert ($T_{Min}$) unterschreitet und Maßnahmen zum Abkühlen des NOx-Speicherkatalysators (17) eingeleitet werden, wenn die Monolithtemperatur einen oberen Schwellenwert ($T_{Max}$) überschreitet.

9. Verfahren nach Anspruch 8, **dadurch gekennzeichnet, daß** die Maßnahmen zum Aufheizen des NOx-Speicherkatalysators (17) eine Verstellung des Zündwinkels in Richtung spät und/oder einen Betrieb der Brennkraftmaschine im Warmlauf mit fettem Gemisch in Verbindung mit Sekundärlufteinblasung umfassen.

10. Verfahren nach Anspruch 8, **dadurch gekennzeichnet, daß** die Maßnahmen zum Abkühlen des NOx-Speicherkatalysators (17) das Ansteuern einer stromauf des NOx-Speicherkatalysators (17) angeordnete Abgasklappe umfassen, die den Abgasweg verlängert, indem sie einen Teil des Abgases in einen Bypass leitet.

**11.** Verfahren nach Anspruch 8, **dadurch gekennzeichnet, daß** die Maßnahmen zum Abkühlen des NOx-Speicherkatalysators einen Betrieb der Brennkraftmaschine mit fettem Gemisch umfassen oder das Aktivieren einer Abgasrückführeinrichtung, mit dem ein Teil des Abgases wieder dem Verbrennungsprozess zugeführt wird.

**Claims**

**1.** Method for detecting and maintaining the operational readiness of a NOx storage catalytic converter (17) fitted in the exhaust gas tract (12) of an internal combustion engine (10), with

- the temperature ($T_{vtr}$, $T_{nvk}$) of the exhaust gas upstream of the NOx storage catalytic converter (17) being determined,

with

- a first honeycomb temperature ($T_{Mon1}$) at the inlet of the NOx storage catalytic converter (17) being determined from the determined exhaust gas temperature ($T_{vtr}$) by means of a temperature model containing energy balancing,

- a second honeycomb temperature ($T_{Mon2}$) at the outlet of NOx storage catalytic converter (17) being determined from the first honeycomb temperature ($T_{Mon1}$) by means of the temperature model,

- a check being made to determine whether both honeycomb temperatures ($T_{Mon1}$, $T_{Mon2}$) lie within a specified temperature interval ($[T_{Min}, T_{Max}]$),

- control measures for the operation of the internal combustion engine (10) being initiated relative to the results of the check, so that this temperature condition ($[T_{Min}, T_{Max}]$) is fulfilled and maintained during the further operation of the internal combustion engine,

**characterised in that**

- the energy balancing contained in the temperature model takes account of the thermal energy of the honeycomb, the thermal mass of the honeycomb, the heat transfer from the exhaust gas to the honeycomb, the exothermal reaction energy and the energy output to the environment by convection, and that

- from the energy balancing a conventional first order differential equation is established from which the particular honeycomb temperature can be determined by integration.

**2.** Method according to Claim 1, **characterised in that** the temperature of the exhaust gas ($T_{vtr}$, $T_{nvk}$) is measured by means of a temperature sensor (21) fitted in the inlet area of the NOx storage catalytic converter (17).

**3.** Method according to Claim 1, **characterised in that** a precatalytic converter (16) is fitted before the NOx storage catalytic converter (17) in the direction of flow of the exhaust gas and the temperature of the exhaust ($T_{nvk}$) is determined at the outlet of the precatalytic converter.

**4.** Method according to Claim 3, **characterised in that** the exhaust gas temperature ($T_{nvk}$) is measured by means of a temperature sensor (20).

**5.** Method according to Claim 3, **characterised in that** the exhaust gas temperature ($T_{nvk}$) is calculated by means of a temperature model for the precatalytic converter (16) and the exhaust gas temperature ($T_{vvk}$) at the outlet of the internal combustion engine is used as an input variable for this model.

**6.** Method according to Claim 3, **characterised in that** the exhaust gas temperature ($T_{nvk}$) is calculated by means of a temperature model for the precatalytic converter (16) and the exhaust gas temperature obtained by using an exhaust gas temperature model is used as the input variable for this model.

**7.** Method according to Claim 6, **characterised in that** at least one of the following state variables of the internal combustion engine: aspirated air mass; inlet manifold pressure; ignition angle; speed; coolant temperature; and ambient temperature which influences the exhaust gas temperature, is used as the input variable for the exhaust gas temperature model.

**8.** Method according to Claim 6, **characterised in that** measures for heating the NOx storage catalytic converter (17) are initiated when the honeycomb temperature drops below a lower threshold value ($T_{Min}$) and measures to cool the NOx storage catalytic converter (17) are initiated when the honeycomb temperature exceeds an upper threshold value ($T_{Max}$).

**9.** Method according to Claim 8, **characterised in that** the measures to heat the NOx storage catalytic converter (17) include retarding the ignition angle and/or operating the internal combustion engine in hot running on a rich mixture in conjunction with secondary-air injection.

**10.** Method according to Claim 8, **characterised in that** the measures for cooling the NOx storage catalytic converter (17) include controlling an exhaust gas valve fitted upstream of the NOx storage catalytic converter (17) which extends the exhaust gas path **in that** part of the exhaust gas is diverted through a bypass.

**11.** Method according to Claim 8, **characterised in that** the measures to cool the NOx storage catalytic converter include operation of the internal combustion engine on a rich mixture or activation of an exhaust gas recirculation device with part of the exhaust gas being fed back to the combustion process.

**Revendications**

**1.** Procédé pour la reconnaissance et le maintien de l'aptitude à agir d'un catalyseur accumulateur de NOx (17) disposé dans la ligne des gaz d'échappement (12) d'un moteur à combustion interne (10), dans lequel

- on détermine la température ($T_{vtr}$, $T_{nvk}$) des gaz d'échappement en amont du catalyseur accumulateur de NOx (17),
- on calcule une première température de monolithe ($T_{Mon1}$) à l'entrée du catalyseur accumulateur de NOx (17) à partir de la température des gaz d'échappement déterminée ($T_{vtr}$) au moyen d'un modèle de température comprenant un bilan énergétique,
- on calcule une seconde température de monolithe ($T_{Mon2}$) à la sortie du catalyseur accumulateur de NOx (17) à partir de la première température de monolithe ($T_{Mon1}$) au moyen du modèle de température,
- on contrôle si les deux températures de monolithe ($T_{Mon1}$, $T_{Mon2}$) sont situées à l'intérieur d'un intervalle de températures prédéterminé ([$T_{Min}$, $T_{Max}$]),
- en fonction du résultat du contrôle, on applique des mesures de commande pour le fonctionnement du moteur à combustion interne (10), de telle manière que cette condition de température ([$T_{Min}$, $T_{Max}$]) soit remplie et soit maintenue lors du fonctionnement ultérieur du moteur à combustion interne,

    **caractérisé en ce que**

- le bilan énergétique compris dans le modèle de température tient compte de l'énergie thermique du monolithe, de la masse thermique du monolithe, du transfert de chaleur des gaz d'échappement au monolithe, de l'énergie de réaction exothermique et du transfert d'énergie à l'ambiance par convection, et **en ce que**
- on établit à partir du bilan énergétique une équation différentielle usuelle du premier ordre, à partir de laquelle on détermine chaque température de monolithe au moyen d'une opération d'intégration.

**2.** Procédé suivant la revendication 1, **caractérisé en ce que** l'on mesure la température des gaz d'échappement ($T_{vtr}$, $T_{nvk}$) au moyen d'un capteur de température (21), qui est disposé dans la région d'entrée du catalyseur accumulateur de NOx (17).

**3.** Procédé suivant la revendication 1, **caractérisé en ce qu'**un précatalyseur (16) est installé avant le catalyseur accumulateur de NOx (17) en considérant le sens de circulation des gaz d'échappement et on détermine la température des gaz d'échappement ($T_{nvk}$) à la sortie du précatalyseur.

**4.** Procédé suivant la revendication 3, **caractérisé en ce que** l'on mesure la température des gaz d'échappement

($T_{nvk}$) au moyen d'un capteur de température (20).

**5.** Procédé suivant la revendication 3, **caractérisé en ce que** l'on calcule la température des gaz d'échappement ($T_{nvk}$) au moyen d'un modèle de température pour le précatalyseur (16) et on utilise comme grandeur d'entrée pour ce modèle la température des gaz d'échappement ($T_{vvk}$) à la sortie du moteur à combustion interne.

**6.** Procédé suivant la revendication 3, **caractérisé en ce que** l'on calcule la température des gaz d'échappement ($T_{nvk}$) au moyen d'un modèle de température pour le précatalyseur (16) et on utilise comme grandeur d'entrée pour ce modèle la température des gaz d'échappement obtenue au moyen d'un modèle de température des gaz d'échappement.

**7.** Procédé suivant la revendication 6, **caractérisé en ce que** l'on utilise comme grandeur d'entrée pour le modèle de température des gaz d'échappement au moins une des grandeurs d'état suivantes du moteur à combustion interne, masse d'air aspiré, pression dans le tuyau d'aspiration, angle d'allumage, régime, température du liquide de refroidissement, température ambiante, qui influence la température des gaz d'échappement.

**8.** Procédé suivant la revendication 6, **caractérisé en ce que** l'on applique des mesures pour le chauffage du catalyseur accumulateur de NOx (17), lorsque la température de monolithe descend en dessous d'une valeur de seuil inférieure ($T_{Min}$) et on applique des mesures pour le refroidissement du catalyseur accumulateur de NOx (17) lorsque la température de monolithe dépasse une valeur de seuil supérieure ($T_{Max}$).

**9.** Procédé suivant la revendication 8, **caractérisé en ce que** les mesures pour le chauffage du catalyseur accumulateur de NOx (17) comprennent un réglage de l'angle d'allumage dans le sens d'un retard et/ou un fonctionnement du moteur à combustion interne à chaud avec un mélange riche en liaison avec une injection d'air secondaire.

**10.** Procédé suivant la revendication 8, **caractérisé en ce que** les mesures pour le refroidissement du catalyseur accumulateur de NOx (17) comprennent la commande d'un clapet de gaz d'échappement disposé en amont du catalyseur accumulateur de NOx (17), qui allonge le chemin des gaz d'échappement en conduisant une partie des gaz d'échappement dans une dérivation.

**11.** Procédé suivant la revendication 8, **caractérisé en ce que** les mesures pour le refroidissement du catalyseur accumulateur de NOx comprennent un fonctionnement du moteur à combustion inteme avec un mélange riche ou l'activation d'un dispositif de recyclage des gaz d'échappement, avec lequel une partie des gaz d'échappement est envoyée à nouveau au processus de combustion.

# FIG 1

EP 1 108 124 B1

## FIG 2

Vorkatalysator
$T_{Mon}$

$\dot{E}_{in}$

$\dot{M}_{Abgas}$

$T_{in}$

$\dot{E}_{aus}$

$\dot{M}_{Abgas}$

$T_{NVK}$

$\dot{E}_{Gas \to Mon}$ $\quad \dot{E}_{Ex}$

$\dot{E}_{Konv}$ $\quad \dot{E}_{Rad}$

## FIG 3

$\eta$
[%]

$T_{Min}$
(250)

$T_{Max}$
(450)

$T_{Mon\,1,2}$ [°C]

## FIG 4

## FIG 5